# EUROPÄISCHE PATENTSCHRIFT

(11) **EP 1 666 802 B1**
(45) Veröffentlichungstag und Bekanntmachung des Hinweises auf die Patenterteilung: **25.06.2008**
(21) Anmeldenummer: 05111128.4
(22) Anmeldetag: 23.11.2005
(51) Int. Cl.: F24F 1/02, F24F 13/02, F16L 33/24

(54) **Mobile Klimaanlage**
Transportable air conditioner
Conditionneur d'air portable

(30) Priorität: 02.12.2004 ES 200402970
(43) Veröffentlichungstag der Anmeldung: 07.06.2006
(73) Patentinhaber: BSH Bosch und Siemens Hausgeräte GmbH, 81739 München (DE)
(72) Erfinder: Abaigar Merino, Jose Ignacio, 31210, Los Arcos (ES); Almendros Carmona, Ismael Jesus, 31012, Pamplona (ES); Gonzales Molina, Juan, 31620, Huarte-Pamplona (Navarra) (ES); Merino Alcaide, Eloy, 31330, Villafranca (ES); Pascual Iturbe, Maria Itziar, 31200, Estella (ES); Ruiz de Larramendi Moreno, Alberto, 31271, Eulate (ES); San Martin Sancho, Roberto, 31200, Estella (ES)

(56) Entgegenhaltungen:
- EP-A- 0 718 564
- EP-A- 0 756 140
- EP-A- 0 979 976
- US-A- 4 888 958
- US-A1- 2004 123 418
- PATENT ABSTRACTS OF JAPAN Bd. 2002, Nr. 08, 5. August 2002 (2002-08-05) & JP 2002 106940 A (UBE KIMITSU HOUSING KK), 10. April 2002 (2002-04-10)

## Beschreibung

### TECHNISCHES GEBIET DER ERFINDUNG

Die Erfindung gehört zum Gebiet der Klimaanlagen mit einem Heißluftauslass, durch den die Luft, die mithilfe eines Kondensators erwärmt ist, aus der Klimaanlage austritt, und mit einem flexiblen Rohr, das unter dem Gesichtspunkt der mechanischen Fluidtechnik über sein Anschlussstück an den Heißluftauslass angeschlossen ist.

### ALLGEMEINER STAND DER TECHNIK

In der Patentschrift EP 0 718 564 ist eine mobile Klimaanlage der Art des Geräts der Erfindung beschrieben. Diese Art von Geräten ist normalerweise zum Kühlen und Entfeuchten von Umgebungen in Benutzung, in denen aus verschiedenartigen Gründen mobile statt ortsfeste Geräte erforderlich sind.

In diesem Zusammenhang beschreibt die JP 2002 106940 A ein System zum Anschluss eines Rohres, welches luftdicht abschließt und sich leicht wieder öffnen lässt.

Sie umfassen normalerweise ein Gehäuse, das die Funktionsteile des Geräts umschließt, welche für den Benutzer aus Sicherheitsgründen nicht leicht zugänglich sein dürfen.

Dieses Gehäuse weist zumindest einen Lufteinlass für die Umgebungsluft, einen Auslass für die kalte oder von dem Gerät klimatisierte Luft und einen Heißluftauslass auf.

Als Hauptteil der Funktionsteile des Geräts kann der Kühlkreislauf genannt werden. Der Kühlkreislauf ist ein geschlossener Kreis, den ein Kühlmittel durchläuft. Außer dem Kühlmittel sind seine Hauptbestandteile der Verdichter, der Kondensator und der Verdampfer. Das gasförmige Kühlmittel, das aus dem Verdampfer über das Rücklaufrohr austritt, wird vom Verdichter absorbiert. Der Verdichter umfasst einen Elektromotor und einen Kolben zum Verdichten des Kühlmittels. Hier verdichtet und erwärmt sich das Kühlmittel. Beim Austritt aus dem Verdichter tritt das Kühlmittel in den Kondensator ein, der sich mit der Umgebung über Luft in Kontakt ist, welche zwangsmäßig über den Lufteinlass des Gehäuses durch einen Ventilator in das Gerät eingeleitet wird, der es aus dem Raum ansaugt; er zwingt sie, die Kondensatorgruppe zu durchlaufen, wodurch sich das Kühlmittel abzukühlen beginnt und in Flüssigkeit umwandelt. Die Luft, die den Kondensator durchläuft, erwärmt sich und wird zum Heißluftablass des Gehäuses gedrängt.

Beim Austritt aus dem Kondensator ist das gesamte Kühlmittel flüssig. In seinem weiteren Verlauf durchläuft das Kühlmittel dann ein Kapillarrohr, das bewirkt, dass es abkühlt und verdampft, wodurch es in Gas umgewandelt ist, wie es auch in den Verdampfer eintritt. Durch den Verdampfer wird ein weiterer Umgebungsluftstrom geleitet, der durch die Öffnung für Umgebungsluft des Gehäuses eintritt und durch den Kaltluftablass abgelassen wird. Die Umgebungsluft kühlt beim Durchlaufen der Verdampfergruppe ab, da das Kühlmittel in ihrem Inneren verdampft, weil der Durchmesser der Rohre des Verdampfers größer als der Durchmesser des Kapillarrohrs ist und die Wärmeleistung der Umgebungsluft absorbiert. Schließlich tritt das Kühlmittel von neuem in den Verdichter ein und ein neuer Kreislauf beginnt.

Die Umgebungsluft, die den Kondensator durchläuft, erwärmt sich, weshalb es notwendig ist, sie aus dem Raum auszutreiben, in dem das Gerät in Betrieb ist. Die Luft wird durch denselben Ventilator zum Heißluftauslass des Gehäuses getrieben, der sie in das Gerät einsaugt und durch den Kondensator treibt.
Zum Leiten der Heißluft vom Heißluftauslass zu beispielsweise einem Fenster des Raums sieht das Gerät der Patentschrift EP 718564 ein flexibles Rohr vor, das zu einem isolierten Auslass des Raums, der klimatisiert werden soll, wie beispielsweise einem Fenster führen kann.

### BESCHREIBUNG DER ERFINDUNG

Es ist die Aufgabe der vorliegenden Erfindung, eine Klimaanlage mit leichterer Handhabung für den Benutzer bereitzustellen.

Diese Aufgabe wird mit einer mobilen Klimaanlage mit einem Heißluftauslass, durch den die Luft, die mithilfe eines Kondensators erwärmt ist, aus der Klimaanlage austritt, und mit einem flexiblen Rohr, das unter dem Gesichtspunkt der mechanischen Fluidtechnik über sein Anschlussstück an den Heißluftauslass angeschlossen ist, gelöst, wobei das Anschlussstück des flexiblen Rohrs mit einer Sperrvorrichtung zur lösbaren Befestigung des Anschlussstücks an dem Gehäuse der Klimaanlage konfiguriert ist.

Bei einem Gerät mit diesem Kennzeichen ermöglicht die Kupplungsvorrichtung die leichte Anbringung und Abnahme des flexiblen Rohrs.

Zur einfacheren Inbetriebnahme der Sperrvorrichtung ist diese mit einem Inbetriebnahmeelement, insbesondere mit einem Druckknopf zum Sperren und Entsperren versehen.

Das Anschlussstück des flexiblen Rohrs ist als Spritzguß-Kunststoffstück konfiguriert, wodurch seine Fertigung einfach und preiswert ist.

Die Sperrvorrichtung ist mit zumindest einem Anschlag konfiguriert, der die Verstellung des Anschlussstücks in vertikaler Richtung verhindert. Auf diese Art und Weise ist das Anschlussstück des flexiblen Rohrs in der Ebene befestigt, in der der Heißluftauslass angeordnet ist, und weist keine relativen Verschiebungen auf.

Außerdem ist die Sperrvorrichtung mit zumindest einem zweiten Anschlag konfiguriert, der die Verstellung des Anschlussstücks in horizontaler Richtung verhindert. Somit ist das Anschlussstück des flexiblen Rohrs an einem festen Punkt über dem Heißluftauslass gesperrt.

Einer des ersten oder zweiten Anschlags ist mit dem Inbetriebnahmeelement in Berührung. Auf diese Art und Weise kann sich der erste oder der zweite Anschlag mithilfe des Inbetriebnahmeelements zwischen einer Sperrposition und einer Entsperrposition bewegen.

In einer Ausführungsform ist das Inbetriebnahmeelement als Kippwechselschalter konfiguriert, in dem der erste oder der zweite Anschlag konfiguriert ist. Mit dem Kippwechselschalter kann auf einfache Weise eine Druckbewegung über das Inbetriebnahmeelement auf den Anschlag ausgeübt sein.

Der Kippwechselschalter ist als Kippachse mit einer Brücke konfiguriert, die ihrerseits mit Elastizität in einer Torsionsrichtung konfiguriert ist. Da die Brücke, die als Kippachse dient, von dem Kippwechselschalter eine elastische Rückwärtsbewegung aufnimmt, kann auf eine zusätzliche Rückstellfeder für den Kippwechselschalter verzichtet sein.

Das Anschlussstück des flexiblen Rohrs ist mit einer Verbindungskante für einen planen Kontakt mit einem Gehäuse der Klimaanlage versehen. Mit der Verbindungskante des Anschlussstücks ist ein dauerhafter Kontakt des Anschlussstücks mit dem Gehäuse der Klimaanlage erzielt.

Die Verbindungskante des Anschlussstücks umgibt zumindest teilweise den Heißluftauslass der Klimaanlage. Auf diese Art und Weise kann die dauerhafte Befestigung des Anschlussstücks am Gehäuse der Klimaanlage weiter verbessert sein.

Das Anschlussstück oder die Verbindungskante des flexiblen Rohrs ist zumindest teilweise in einer Vertiefung des Gehäuses der Klimaanlage konfiguriert. Aufgrund der Anordnung des Anschlussstücks des flexiblen Rohrs in der Vertiefung des Gehäuses der Klimaanlage ist das Anschlussstück gegen Einwirkungen von außen, beispielsweise Belastungen durch Stöße, geschützt.

Die Vertiefung ist im Grunde im Formschluss gegenüber dem Anschlussstück konfiguriert. Mit dem Formschluss des Anschlussstücks gegenüber der Vertiefung des Gehäuses ist eine besonders gute Befestigung des flexiblen Rohrs an dem Gehäuse erzielt, die relative Verschiebungen vermindert.

Die Vertiefung weist eine Zentrierungswand auf, an der das Anschlussstück des flexiblen Rohrs bis zu seiner Betriebsposition entlanggeführt ist. Dank der Zentrierungswand kann das Anschlussstück auf einfache Weise bis zu seiner Betriebsposition geführt sein.

Die Sperrvorrichtung ist in der Verbindungskante des Anschlussstücks konfiguriert. Auf diese Art und Weise ist die Sperrvorrichtung in einem bestimmten Abstand zu dem flexiblen Rohr und dem Heißluftauslass angeordnet, wodurch die Wärmebelastung der Sperrvorrichtung aufgrund der Heißluft verringert ist.

### BESCHREIBUNG DER FIGUREN

Zur Ergänzung der im folgenden ausgeführten Beschreibung und um zu einem besseren Verständnis der Kennzeichen der Erfindung zu verhelfen, liegt dieser Beschreibung ein Satz Zeichnungen bei, auf deren Grundlage die Neuerungen und Vorteile der gemäß der Aufgabe der Erfindung ausgeführten Klimaanlage leichter verständlich werden.

### Es zeigen:

- Figur 1.-: eine Perspektivansicht der Rückseite der Klimaanlage;
- Figur 2.-: eine vergrößerte Perspektivansicht der Rückseite des Geräts mit dem Anschlussstück des flexiblen Rohrs, das auf dem Heißluftauslass angeordnet ist.

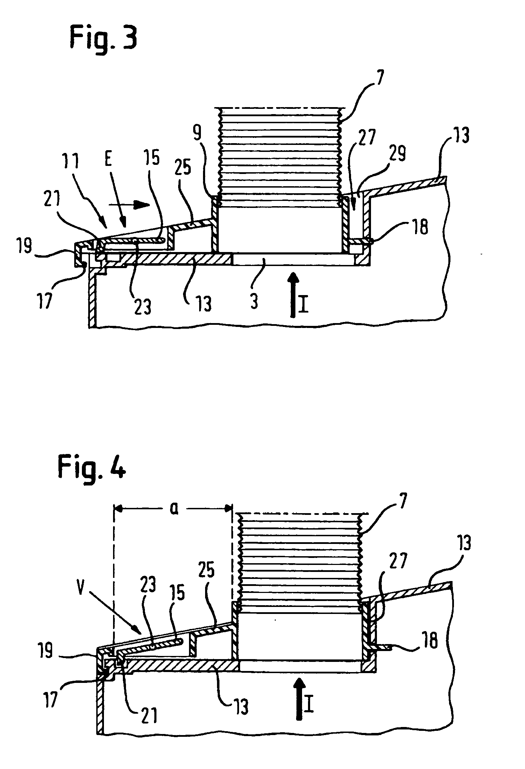

- Figur 3.-: eine vergrößerte Schnittansicht des Heißluftauslasses der Klimaanlage mit dem Anschlussstück des flexiblen Luftableitungsrohrs in Einbauposition.
- Figur 4.-: eine vergrößerte Schnittansicht des Heißluftauslasses der Klimaanlage mit dem Anschlussstück des flexiblen Luftableitungsrohrs in Betriebsposition.
- Figur 5.-: eine vereinfachte Ansicht der Grundbauteile einer Klimaanlage.

### BESCHREIBUNG EINER BEVORZUGTEN AUSFÜHRUNGSFORM

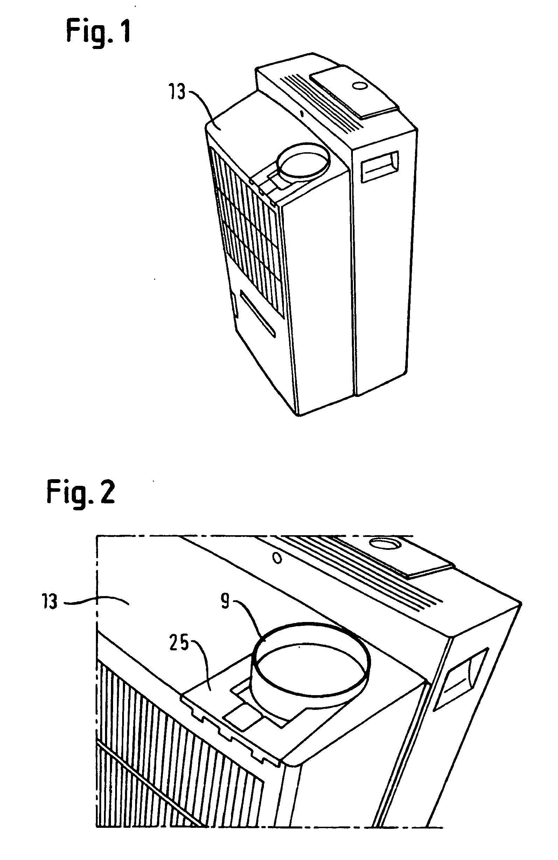

In der mobilen Klimaanlage von Figur 1 ist eine mobile Klimaanlage der Art des Geräts der Erfindung zu sehen. Diese Art von Geräten ist normalerweise zum Kühlen und Entfeuchten von Umgebungen in Benutzung, in denen aus verschiedenartigen Gründen mobile statt ortsfeste Geräte erforderlich sind.

Sie umfassen normalerweise ein Gehäuse, die die Funktionsteile des Geräts umschließt, welche für den Benutzer aus Sicherheitsgründen nicht leicht zugänglich sein dürfen.

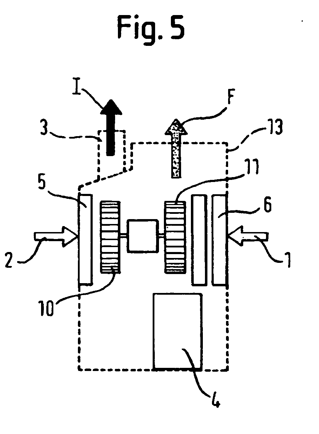

In Figur 5 ist das Gerät mit dem Gehäuse 13, welches zwei Lufteinlässe 1 und 2 für die Umgebungsluft, einen Auslass für die Kaltluft F und einen Auslass 3 für Heißluft I aufweist, schematisch dargestellt. In ihrem Inneren befinden sich der Verdichter 4, der Kondensator 5 und der Verdampfer 6.

Ein Ventilator 11 saugt Umgebungsluft an und lässt sie den Verdampfer 6 durchlaufen, der sie kühlt und durch den Kaltluftauslass austreten lässt.

Andererseits saugt ein Ventilator 10 Umgebungsluft an und lässt sie den Kondensator 5 durchlaufen und durch den Heißluftauslass 3 des Gehäuses austreten. Die Umgebungsluft, die den Kondensator 5 durchläuft, erwärmt sich, weshalb es notwendig ist, sie aus dem Raum auszutreiben, in dem das Gerät in Betrieb ist.

Zum Leiten der Heißluft I vom Heißluftauslass 3 des Gehäuses zu beispielsweise einem Fenster des Raums sieht das Gerät ein flexibles Rohr 7 vor, das über ein Anschlussstück 9, das aus Kunststoff geformt ist, an den Heißluftauslass 3 angeschlossen ist.

Das Anschlussstück 9 des flexiblen Rohrs 7 ist mit einer Sperrvorrichtung 11 zur lösbaren Befestigung des Anschlussstücks an dem Gehäuse 13 der Klimaanlage konfiguriert.

Zur einfacheren Inbetriebnahme der Sperrvorrichtung 11 ist diese mit einem Inbetriebnahmeelement, insbesondere mit einem Druckknopf 15 zum Sperren und Entsperren versehen. Die Sperrvorrichtung 11 ist mit einem ersten Anschlag 17, 18, der die Verstellung des Anschlussstücks in vertikaler Richtung verhindert, und mit einem zweiten Anschlag 19, 21 konfiguriert, der die Verstellung des Anschlussstücks in horizontaler Richtung verhindert. Der Druckknopf 15 ist als Kippwechselschalter konfiguriert, in dem der zweite Anschlag 19, 21 konfiguriert ist.

Der Kippwechselschalter 15 ist als Kippachse 23 mit einer Brücke konfiguriert, die ihrerseits mit Elastizität in einer Torsionsrichtung konfiguriert ist.

Das Anschlussstück 9 des flexiblen Rohrs 7 ist mit einer Verbindungskante 25 für einen planen Kontakt mit dem Gehäuse 13 der Klimaanlage versehen.

Die Verbindungskante 25 des Anschlussstücks 9 umgibt teilweise den Heißluftauslass 3 der Klimaanlage.

Die Verbindungskante 25 des flexiblen Rohrs 7 ist teilweise in einer Vertiefung 27 des Gehäuses der Klimaanlage konfiguriert. Die Vertiefung 27 ist im Formschluss gegenüber der Verbindungskante 25 konfiguriert.

Die Vertiefung 27 weist eine Zentrierungswand 29 auf, an der die Verbindungskante 25 des flexiblen Rohrs 7 bis zu ihrer Betriebsposition V von der Einbauposition E entlanggeführt ist.

Die Sperrvorrichtung 11 ist in der Verbindungskante 25 des Anschlussstücks konfiguriert. Auf diese Art und Weise ist die Sperrvorrichtung in einem bestimmten Abstand "a" bezüglich des flexiblen Rohrs 7 und des Heißluftanschlusses angeordnet, wodurch die Wärmebelastung der Sperrvorrichtung aufgrund der Heißluft I verringert ist.

## Patentansprüche

1. Mobile Klimaanlage mit einem Heißluftauslass (3), durch den die Luft (I), die mithilfe eines Kondensators (5) erwärmt ist, aus der Klimaanlage austritt, und mit einem flexiblen Rohr (7), das unter dem Gesichtspunkt der mechanischen Fluidtechnik über sein Anschlussstück (9) an den Heißluftauslass (3) angeschlossen ist, wobei das Anschlussstück (9) des flexiblen Rohrs (7) mit einer Sperrvorrichtung (11) zur lösbaren Befestigung des Anschlussstücks (9) an dem Gehäuse (13) der Klimaanlage konfiguriert ist, wobei die Sperrvorrichtung (11) mit zumindest einem ersten Anschlag (17, 18) konfiguriert ist, der die Verstellung des Anschlussstücks (9) in vertikaler Richtung verhindert, **dadurch gekennzeichnet, dass** die Sperrvorrichtung (11) mit zumindest einem zweiten Anschlag (19, 21) konfiguriert ist, der die Verstellung des Anschlussstücks (9) in horizontaler Richtung verhindert.

2. Mobile Klimaanlage nach Anspruch 1, **dadurch gekennzeichnet, dass** die Sperrvorrichtung (11) mit einem Inbetriebnahmeelement, insbesondere mit einem Druckknopf (15) zum Sperren und Entsperren konfiguriert ist.

3. Mobile Klimaanlage nach einem der Ansprüche 1 oder 2, **dadurch gekennzeichnet, dass** das Anschlussstück (9) des flexiblen Rohrs (7) als Spritzguß-Kunststoffstück konfiguriert ist.

4. Mobile Klimaanlage nach Anspruch 1, **dadurch gekennzeichnet, dass** einer des ersten oder zweiten Anschlags (17, 18, 19, 21) mit dem Inbetriebnahmeelement (15) in Berührung steht.

5. Mobile Klimaanlage nach einem der Ansprüche 2 bis 4, **dadurch gekennzeichnet, dass** das Inbetriebnahmeelement (15) als Kippwechselschalter konfiguriert ist, in dem der erste oder der zweite Anschlag konfiguriert ist (21).

6. Mobile Klimaanlage nach Anspruch 5, **dadurch gekennzeichnet, dass** der Kippwechselschalter (15) als Kippachse mit einer Brücke (23) konfiguriert ist, die ihrerseits mit Elastizität in einer Torsionsrichtung konfiguriert ist.

7. Mobile Klimaanlage nach einem der vorhergehenden Ansprüche, **dadurch gekennzeichnet, dass** das Anschlussstück (9) des flexiblen Rohrs (7) mit einer Verbindungskante (25) für einen planen Kontakt mit einem Gehäuse (13) der Klimaanlage konfiguriert ist.

8. Mobile Klimaanlage nach Anspruch 7, **dadurch gekennzeichnet, dass** die Verbindungskante (25) des Anschlussstücks (9) zumindest teilweise den Heißluftauslass (3) der Klimaanlage umgibt.

9. Mobile Klimaanlage nach einem der vorhergehenden Ansprüche, **dadurch gekennzeichnet, dass** das Anschlussstück (9) oder die Verbindungskante (25) des flexiblen Rohrs (7) zumindest teilweise in einer Vertiefung (27) des Gehäuses (13) der Klimaanlage konfiguriert sind.

10. Mobile Klimaanlage nach Anspruch 9, **dadurch gekennzeichnet, dass** die Vertiefung (27) im Grunde im Formschluss gegenüber dem Anschlussstück (9) konfiguriert ist.

11. Mobile Klimaanlage nach einem der Ansprüche 9, oder 10, **dadurch gekennzeichnet, dass** die Vertiefung (27) eine Zentrierungswand (29) aufweist, an der das Anschlussstück (9) des flexiblen Rohrs (7) bis zu seiner Betriebsposition entlanggeführt ist.

12. Mobile Klimaanlage nach einem der Ansprüche 7 bis 11, **dadurch gekennzeichnet, dass** die Sperrvorrichtung (11) in der Verbindungskante (25) des Anschlussstücks (9) konfiguriert ist.

## Claims

1. Mobile air-conditioning installation with a hot air outlet (3), through which the air (I), which is heated with the help of a condenser (5), exits from the air-conditioning installation, and with a flexible pipe (7) which is connected under the aspect of mechanical fluid technology by way of its connecting member (9) with the hot air outlet (3), wherein the connecting member (9) of the flexible pipe (7) is configured with a locking device (11) for detachable fastening of the connecting member (9) with the housing (13) of the air-conditioning installation and wherein the locking device (11) is configured with at least one first abutment (17, 18) which prevents adjustment of the connecting member (9) in vertical direction, **characterised in that** the locking device (11) is configured with at least one second abutment (19, 21) which prevents adjustment of the connecting member (9) in horizontal direction.

2. Mobile air-conditioning installation according to claim 1, **characterised in that** the locking device (11) is configured with an element for placing in operation, particularly with a press button (15) for locking and unlocking.

3. Mobile air-conditioning installation according to one of claims 1 and 2, **characterised in that** the connecting member (9) of the flexible pipe (7) is configured as an injection-moulded plastics material member.

4. Mobile air-conditioning installation according to claim 1, **characterised in that** one of the first or second abutments (17, 18, 19, 21) is disposed in contact with the element (15) for placing in operation.

5. Mobile air-conditioning installation according to any one of claims 2 to 4, **characterised in that** the element (15) for placing in operation is configured as a rocker selector switch in which the first or the second abutment is configured (21).

6. Mobile air-conditioning installation according to claim 5, **characterised in that** the rocker selector switch (15) is configured as a tip axle with a bridge (23), which in turn is configured with elasticity in a torsional direction.

7. Mobile air-conditioning installation according to any one of the preceding claims, **characterised in that** the connecting member (9) of the flexible pipe (7) is configured with a connecting edge (25) for a planar contact with a housing (13) of the air-conditioning installation.

8. Mobile air-conditioning installation according to claim 7, **characterised in that** the connecting edge (25) of the connecting member (9) at least partly surrounds the hot air outlet (3) of the air-conditioning installation.

9. Mobile air-conditioning installation according to any one of the preceding claims, **characterised in that** the connecting member (9) or the connecting edge (25) of the flexible pipe (7) is configured at least partly in a recess (27) of the housing (13) of the air-conditioning installation.

10. Mobile air-conditioning installation according to claim 9, **characterised in that** the recess (27) is configured in the base in mechanically positive couple relative to the connecting member (9).

11. Mobile air-conditioning installation according to one of claims 9 and 10, **characterised in that** the recess (27) has a centring wall (29) along which the connecting member (9) of the flexible pipe (7) is guided up to its operating position.

12. Mobile air-conditioning installation according to any one of claims 7 to 11, **characterised in that** the locking device (11) is configured in the connecting edge (25) of the connecting member (9).

## Revendications

1. Installation de climatisation mobile comprenant une sortie d'air chaud (3), par laquelle l'air (1), qui est réchauffé à l'aide d'un condensateur (5), sort de l'installation de climatisation, et un tuyau (7) flexible, qui est raccordé sous l'aspect de la fluidique mécanique par son raccord (9) à la sortie d'air chaud (3), le raccord (9) du tuyau (7) flexible étant configuré avec un dispositif de blocage (11) pour la fixation amovible du raccord (9) sur le boîtier (13) de l'installation de climatisation, le dispositif de blocage (11) étant configuré avec au moins une première butée (17, 18) qui empêche le déplacement du raccord (9) dans la direction verticale, **caractérisée en ce que** le dispositif de blocage (11) est configuré avec au moins une seconde butée (19, 21) qui empêche le déplacement du raccord (9) dans la direction horizontale.

2. Installation de climatisation mobile selon la revendication 1, **caractérisée en ce que** le dispositif de blocage (11) est configuré avec un élément de mise en service, en particulier avec un bouton à pression (15) pour le blocage et le déblocage.

3. Installation de climatisation mobile selon l'une quelconque des revendications 1 ou 2, **caractérisée en ce que** le raccord (9) du tuyau (7) flexible est configuré comme une pièce en plastique moulé injecté.

4. Installation de climatisation mobile selon la revendication 1, **caractérisée en ce que** l'une de la première ou de la seconde butée (17, 18, 19, 21) est en contact avec l'élément de mise en service (15).

5. Installation de climatisation mobile selon l'une quelconque des revendications 2 à 4, **caractérisée en ce que** l'élément de mise en service (15) est configuré sous la forme dé commutateur inverseur basculant, dans lequel la première ou la seconde butée est configurée (21).

6. Installation de climatisation mobile selon la revendication 5, **caractérisée en ce que** le commutateur inverseur basculant (15) est configuré comme axe de basculement avec un pont (23), qui, pour sa part, est configuré avec élasticité dans un sens de torsion.

7. Installation de climatisation mobile selon l'une quelconque des revendications précédentes, **caractérisée en ce que** le raccord (9) du tuyau (7) flexible est configuré avec une arête de liaison (25) pour un contact plan avec un boîtier (13) de l'installation de climatisation.

8. Installation de climatisation mobile selon la revendication 7, **caractérisée en ce que** l'arête de liaison (25) du raccord (9) entoure au moins partiellement la sortie d'air chaud (3) de l'installation de climatisation.

9. Installation de climatisation mobile selon l'une quelconque des revendications précédentes, **caractérisée en ce que** le raccord (9) ou l'arête de liaison (25) du tuyau (7) flexible est configuré au moins partiellement dans une cavité (27) du boîtier (13) de l'installation de climatisation.

10. Installation de climatisation mobile selon la revendication 9, **caractérisée en ce que** la cavité (27) est configurée dans le fond en conjugaison de formes par rapport au raccord (9).

11. Installation de climatisation mobile selon l'une quelconque des revendications 9 ou 10, **caractérisée en ce que** la cavité (27) présente une paroi de centrage (29), le long de laquelle le raccord (9) du tuyau (7) flexible est guidé jusqu'à sa position de service.

12. Installation de climatisation mobile selon l'une quelconque des revendications 7 à 11, **caractérisée en ce que** le dispositif de blocage (11) est configuré dans l'arête de liaison (25) du raccord (9).
